# EUROPEAN PATENT APPLICATION

(11) **EP 3 978 956 A1**
(43) Date of publication of application: **06.04.2022**
(21) Application number: 20199825.9
(22) Date of filing: 02.10.2020
(51) Int. Cl.: G01T 1/20

(54) **SCINTILLATION ELEMENT FOR AN X-RAY DETECTOR**

(71) Applicant: Koninklijke Philips N.V., 5656 AG Eindhoven (NL)
(72) Inventor: WIECZOREK, Herfried Karl, 5656 AE Eindhoven (NL); SIMON, Matthias, 5656 AE Eindhoven (NL); DE LAAT, Antonius Wilhelmus Maria, 5656 AE Eindhoven (NL)
(74) Representative: Philips Intellectual Property & Standards

(57) **Abstract**

The invention concerns a scintillation element (300) for an X-ray detector, an X-ray detector comprising such scintillation element, and a method for manufacturing a scintillation element for an X-ray detector. The scintillation element (300) comprises a scintillation material (304) for X-ray radiation, and a photodiode (102), wherein the scintillation material is arranged on the photodiode. The scintillation material comprises an upper end configured to receive X-ray radiation, a lower end being in contact with the photodiode, and at least one optical channel (307) extending within the scintillation material, wherein the optical channel is configured for transferring electromagnetic radiation, which was generated in the scintillation material when having received the X-ray radiation, along the optical channel towards the photodiode. The at least one optical channel extends in a direction from the upper end of the scintillation material towards the lower end of the scintillation material and towards the photodiode, and wherein the at least one optical channel is completely surrounded by the scintillation material.

## Description

### FIELD OF THE INVENTION

The invention relates to the field of scintillation elements for X-ray detectors, and more specifically to a scintillation element comprising at least one optical channel, to an X-ray detector and to a method of manufacturing a scintillation element for an X-ray detector.

### BACKGROUND OF THE INVENTION

X-ray imaging uses a combination of scintillator layer and photodiode array, for example made of amorphous silicon. A scintillator array may consist of a scintillation material, for instance scintillation powder, which is used with photodiodes on a substrate. X-ray generated electromagnetic radiation (photons) in such layers cannot easily escape and is hindered from escape in the scintillation pixel due to a high powder volume fraction. In particular, 3D-printed scintillator layers require a high scintillator powder fraction in the material to allow efficient X-ray absorption in the layers.

Most scintillation layers should have an ideal thickness in the range of 1 mm, even with this high scintillation powder fraction in the material. A maximum thickness of the scintillation layer is limited by multiple optical scatter and self-absorption of photons in the scintillation layer, or in the scintillation pixels. Using a reflector between the scintillator pixels and for example as a backside layer of the whole pixel array should prevent crosstalk between scintillator pixels and should increase the signal measured by the photodiode array. Photons emitted into the gaps separating scintillator pixels will not be absorbed by photodiodes because of the 1:1 correspondence of pixel and diodes, therefore these gaps may be filled with a reflector for reflecting the photons back. For instance a reflector is used, which is arranged in gaps surrounding scintillation pixels, for reducing the optical crosstalk, the effect of the reflector is that it minimizes the light (which means the photons) emitted from the scintillation pixels into the gaps but does not increase a reflection of light directly into the photodiode.

The inventors of the present invention have observed that a reflector arranged at the scintillator pixels reduce the overall signal. For instance for an array of about 250 µm pixel size a 28% reduction has been measured. This indicates that a back reflection of photons from the gaps into the scintillator pixel does not improve the collection of electromagnetic radiation generated in a scintillation material.

### SUMMARY OF THE INVENTION

Therefore, there exists a need for optimizing the light output of a scintillation element, a scintillator layer, a scintillator array, and/or a scintillator pixel. There exists a need for an improved process of light transfer inside the scintillation material, such that scattering of light inside the material can be reduced and/or the influence of the scattering of the light inside the material can be avoided.

The object of the present invention is solved with the subject matter of the independent claims, wherein further embodiments are incorporated in the dependent claims.

An object of the invention is to provide an improved scintillation layer/pixel, in which electromagnetic radiation (photons) from a scintillator material, in particular scintillator powder, are transferred, where they are generated, to the photodiode.

According to a first aspect of the invention a scintillation element for an X-ray detector, the scintillation element comprises a scintillation material for X-ray radiation, a photodiode, wherein the scintillation material is arranged on the photodiode. The scintillation material comprises an upper end configured to receive X-ray radiation, a lower end being in contact with the photodiode, and at least one optical channel extending within the scintillation material. The at least one optical channel is configured for transferring electromagnetic radiation, which was generated in the scintillation material when having received the X-ray radiation, along the optical channel towards the photodiode. The at least one optical channel extends in a direction from the upper end of the scintillation material towards the lower end of the scintillation material and towards the photodiode, and wherein the at least one optical channel is completely surrounded by the scintillation material.

In the context of the present invention, the term "scintillation element" shall be understood to describe an element comprising scintillation properties, i.e. the scintillation element exhibits scintillation, when excited by ionizing radiation, i.e. X-ray radiation. The scintillation element may be configured in various shapes depending on the preferred application and depending on the preferred X-ray detector. For instance, the scintillation element may be one single scintillation element used in an X-ray detector, on the other hand the scintillation element may be comprised of a plurality of scintillation elements used in an X-ray detector. In the scintillation element the above mentioned components, such as the scintillation material and the optical channel, are arranged. The scintillation element emits light, which was generated within the scintillation element due to a scintillation, and the emitted light is received by the photodiode for generating an electrical signal based on the received emitted light. The photodiode may cover the complete lower end of the scintillation material, such that the photodiode is configured for receiving all of the emitted light.

In the context of the present invention, the term "scintillation material" shall be understood to describe a material, which is able to convert radiation, in particular high-energy radiation, to a near visible or visible light. The scintillation material can be an organic and/or inorganic material, such as glass, single crystal, and/or ceramics. In particular, the scintillation material may be a powder of the above mentioned materials embedded in a polymer.

In the context of the present invention, the term "optical channel" shall be understood to describe a gap, or pillar which extends within the scintillation material, in particular which extends inside the scintillation element. The term "extending within" shall be understood to describe that the optical channel is arranged within the scintillation material, wherein it has an extending direction for transferring the light generated in the scintillation material towards a photodiode. The optical channel may extend in every depth of the scintillation material. For instance, the scintillation material has a front side and a back side (lying opposite to each other), which both are arranged perpendicular to the upper end and the lower end of the scintillation material, wherein one optical channel may extend at a front side or at the back side and another optical channel may extend at a back side or at the front side (or vice versa). In other words, the optical channel may be arranged at every location inside the scintillation material along a lateral direction and/or along a direction perpendicular to the lateral direction, which means along the depth of the scintillation material.

The optical channel may be able to transfer the electromagnetic radiation, the light, wherein the optical channel may provide a (light) path for the light emitted in the scintillation material, such that this light may be collected and guided through the optical channel through the scintillation material, in particular through the scintillation element and towards a photodiode. When using an optical channel for guiding, transferring the generated electromagnetic radiation inside of the scintillation material it may allow increasing the thickness of the scintillation material and the amount of collected electromagnetic radiation. As the optical channel is used for the guiding, transferring of the electromagnetic radiation the influence of the thickness of the scintillation material is reduced which allows increasing the thickness of the scintillation material, and negative effects of a larger size can be avoided.

For mitigating the issue of the escape of hindered electromagnetic radiation (photons) in scintillator layers at least one or a plurality of optical channels within the scintillator layer (pixel) are introduced. This should reduce multiple scatter and self-absorption inside of the scintillator layer, and/or scintillator pixel. The photons can reach the absorbing photodiodes when at least one optical channel or more than one optical channels are arranged within the scintillation material. The emitted light is channeled in these gaps/channels to reach the photodiode arranged at the bottom (lower end) of the scintillator layer. At the photodiode a significant higher signal can be detected due to the transfer of the collected emitted light by the optical channel. Further, this light transferring method allows obtaining a significantly higher signal with only a minor loss in X-ray absorption. This is in particular advantageous for 3D-printed scintillator arrays, which can be used in dual layer detectors for stroke imaging.

According to an exemplary embodiment of the invention, the optical channel comprises an upper side and a lower side, wherein the upper side is facing the upper end of the scintillation material and the lower side is facing the lower end of the scintillation material. The upper side and/or the lower side are spaced apart from the respective upper end and lower end of the scintillation material. According to this embodiment of the invention, the optical channel is completely surrounded by the scintillation material and the upper side and the lower side of the optical channel are arranged with a distance to the respective upper end and lower end of the scintillation material. Due to the arrangement of the optical channel, the upper side of the optical channel is facing the side of the scintillation element, which is configured to receive X-ray radiation, and the lower side of the optical channel is facing the photodiode at which the scintillation material is arranged. By providing such an arrangement of the optical channels the electromagnetic radiation (photons), the light, inside the scintillation material can reach the optical channels and guided through the scintillation material by the optical channels and the photons can reach the photodiode after (multiple) reflection within the optical channel.

According to an exemplary embodiment of the invention, a distance by which the upper side and the lower side of the optical channel are spaced apart from the upper and lower end of the scintillation material is in a range of 1 µm to 60 µm, in particular in a range of 1 µm to 30 µm. In other words, the optical channel may be arranged inside the scintillation material, wherein a scintillation material layer with a short distance in the above mentioned range is arranged above and/or below the optical channel. The light emitted in this thin layer above/below the optical channel can still reach the channel without a notable absorption inside the scintillation material and without reducing the signal to be detected by the photodiode. On the other hand, the light guided through the optical channel can still reach the photodiode when the layer of the scintillation material between the optical channel and the photodiode is in the range of 1 µm to 60 µm, in particular in a range of 1 µm to 30 µm. Depending on the method for manufacturing the scintillation element, a residual scintillation material having a thickness in the above mentioned range would be easier to manufacture. For instance, when the optical channel in the scintillation elements may be manufactured using a laser based method, it may be better that the laser does not cut down to the photodiode, for preventing damage to the photodiode.

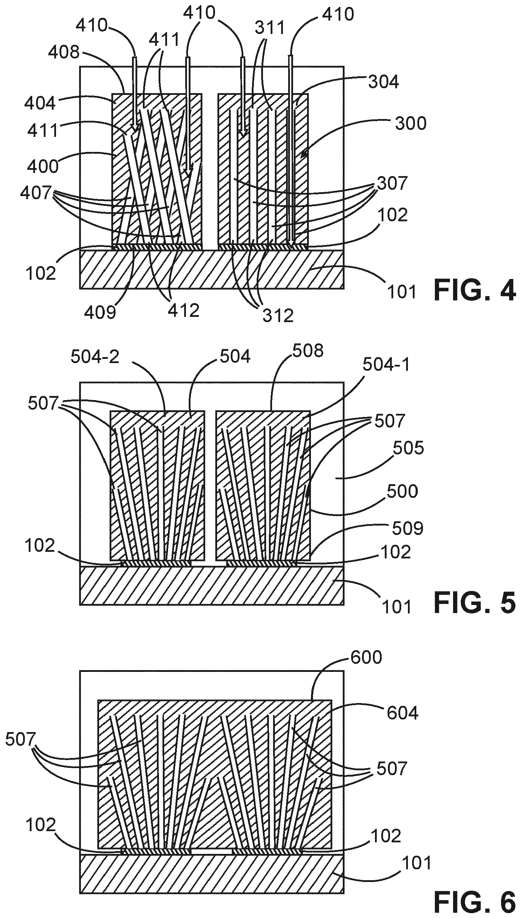

According to an exemplary embodiment of the invention, a distance of the lower side of the optical channel to the lower end of the scintillation material is 0 µm. In this embodiment the optical channel is arranged above the photodiode and the optical channels is in direct contact with the photodiode, as illustrated in Fig. 4 and Fig. 5. This configuration may allow a direct transfer of the light through the optical channel on the photodiode, such that the signal loss is minimized or even prevented and the absorption inside the scintillation material is reduced. In a corresponding embodiment a distance of the upper side of the optical channel to the upper end of the scintillation material may be 0 µm.

According to an exemplary embodiment of the invention, the optical channel is a non-filled optical channel comprising air or is a filled optical channel filled with a transparent material, which is transparent in the optical spectrum in the visible, ultraviolet or near infrared range. The visible range is a portion of the electromagnetic spectrum in a wavelength range from about 380 nm to 740 nm, The ultraviolet spectrum is a portion of the electromagnetic spectrum in a wavelength range from about 10 nm to 400 nm. The near infrared range is a portion of the electromagnetic spectrum in a wavelength range from about 760 nm to 2400 nm. The transparent material may be a polymer, which is transparent in the optical spectrum. These optical channels, when comprising air, may be formed in such a manner that they be left empty during the manufacturing for forming optical air channels. The transparent material is configured for being able to transfer the light generated and emitted in the scintillation material through the optical channel made of the transparent material, wherein the transferred light is not effected by the transparent material.

According to an exemplary embodiment of the invention, the optical channel comprises a round, elliptical, rectangular, or a quadratic cross section. The cross section of the channel may be approximately round, elliptical, rectangular or quadratic. The shape of the cross section may depend on the scintillation material, which is used for the scintillation element and the production form dependent thereon.

According to an exemplary embodiment of the invention, the optical channel comprises a thickness in a range of 5 µm to 100 µm, in particular in a range of 10 µm to 50 µm, more particular in a range of 10 µm to 30 µm. By arranging such thin optical channels, the size of the scintillation material is not significantly affected, in particular the amount of material to absorb X-ray radiation in the scintillation material is not significantly affected. With respect to the scintillation material and to the size of the scintillation element no size adaption is necessary when introducing such thin optical channels. Therefore, the strong absorption the X-ray radiation of the scintillation element can be preserved and the spatial resolution can be kept high.

According to an exemplary embodiment of the invention, the optical channel extends perpendicular to a main extension plane of the photodiode, which main extension plane extends perpendicular to an X-ray radiation receiving direction. In other words, the optical channel is arranged with an angle of approximately 90 degrees above the photodiode. When a plurality of optical channels are used, each optical channel extends perpendicular to a main extension plane of the photodiode.

According to an exemplary embodiment of the invention, the optical channel extends towards the photodiode with an angle between 0° to 20° with respect to an X-ray radiation receiving direction, which is perpendicular to a main extension plane of the photodiode. An angle between 0° to 10° may also be applicable. In this configuration, the optical channel extends to the side of the photodiode in an oblique angle, for ensuring that there is no area with low X-ray absorption within the scintillation material. By arranging the optical channel in an oblique angle, the optical channel extends along a larger width of the scintillation material such that more light emitted in the scintillation material can be collected in the optical channel, reflected into the optical channel, and/or transferred in the optical channel towards the photodiode. Further, using an oblique optical channel enables a collection of electromagnetic radiation, light (photons) from lateral regions of the scintillation material. Moreover, when adjusting an angle in a range between 0° to 20° (or 0° to 10°) the electromagnetic radiation transferred by the optical channel is transferred inside the respective scintillation material and only to the respective photodiode. For instance the scintillation element may comprise a scintillation material in form of a scintillation material pixel, which embodiment is illustrated in the description hereinafter and in Fig. 5, the small angle avoids a transfer of the electromagnetic radiation into a neighbor pixel. Hence, the electromagnetic radiation is assigned to the respective scintillation material pixel and crosstalk of electromagnetic radiation between different scintillation material pixels can be prevented.

According to an exemplary embodiment of the invention, the scintillation element comprises a plurality of said optical channels. The optical channels may be arranged with a distance from each other inside the scintillation element, wherein the distance is in a range from 50 µm to 500 µm, in particular in a range from 50 µm to 200 µm. This arrangement of the plurality of channels may for example be applicable for pixels in an X-ray detector with typical dimensions of 100 µm to 300 µm and for other applications like computed tomography that user larger pixels of typically 1 mm to 1.5 mm size. The plurality of optical channels may be arranged with the above mentioned distance and perpendicular to the main extension plane of the photodiode. Further, the plurality of optical channels may be arranged with the above mentioned distance and with the oblique angel in a range between 0° to 20°. Therefore, each of the plurality of optical channels may comprise the features as described with the above mentioned embodiment referring to at least one optical channel. In the scintillation material the plurality of optical channels may be arranged such that the emitted light in the scintillation material can be collected from all lateral regions. An amount of the plurality of optical channels inside the scintillation material my only be limited by the size of the scintillation material and the required distance of the optical channels to each other. For instance, the optical channels may be arranged adjacent to each other, which means side by side, and one after another with the respective distance between them. For example, the optical channels may be arranged in row and columns, 1x1 to 4x4/8x8 per scintillation element, further variation are possible, which arrangement may only be limited by the size of the scintillation element. The scintillation element may be formed of the scintillation material without any gaps or reflector for separating the scintillation material.

According to an exemplary embodiment of the invention, a distance between each of the plurality of optical channels on the upper end of the scintillation material is larger than a distance of the plurality of optical channels on the lower end of the scintillation material. In other words, the plurality of channels comprise an arrangement in a conical shape, the distance of the channels is tapering from the side illuminated by the X-ray radiation towards the photodiode. With this arrangement, the oblique optical channels allow collecting of light (photons) from lateral regions and concentrating the optical channels at one side in the vicinity of a photodiode. Alternatively, a concentration near the photodiode or on the photodiode may be possible, depending on the respective embodiment of the optical channel. Hence, the photodiode may be smaller than the (pixel size in the) scintillation material. According to this configuration, the scintillation material may be arranged along the photodiode and may extend over at least one side of the photodiode. The detailed embodiment will be described in the Figs hereinafter. The scintillation element may be larger than the photodiode. Using a larger sized scintillation element may allow for instance the optical channel in the cone shaped arrangement, to cover the whole area of the scintillation material in their upper part but to be concentrated on their smaller area of the photodiode in their lower part, like a cone beam. In this way, the fill factor of the scintillator element used in a detector array can be high even with a sparse arrangement of photodiodes and/or with a small photodiode. An optical crosstalk in the scintillation material can be strongly reduced by this cone beam-like collection of light (photons).

According to an exemplary embodiment of the invention, the scintillation material is a powder embedded in a polymer, wherein the powder comprises at least one of rare earth oxysulfides, oxides, garnets, perovskites, zinc sulphide, calcium tungstate, cadmium tungstate, or ceramic powder. Each of the above-mentioned powder may be applicable in the scintillation material or a combination thereof. In particular, the use of at least one of the powders may be understood as describing, that each of the powder may be used as single powder in the scintillation material and/or that a combination of any of these powders can be used in the scintillation material.

According to an exemplary embodiment of the invention, the powder comprises a grain size below 10 µm. This grain size is a small grain size, as used for 3D printed scintillation arrays.

According to an exemplary embodiment of the invention, the scintillation element further comprises a plurality of photodiodes, wherein for each photodiode of the plurality of photodiodes at least one optical channel is arranged. In this embodiment, the optical channel for each photodiode may be arranged perpendicular to the main extension direction of the photodiode or it may be arranged oblique to the extension direction of the photodiode. Moreover, for each photodiode a plurality of optical channels may be arranged such that the light collection for each photodiode is increased. According to this embodiment, the scintillation element may be formed as a scintillation layer arranged above a plurality of photodiodes. In this way, the fill factor of the scintillator element used in a detector array can be high even with an arrangement of a small photodiode.

According to an exemplary embodiment of the invention, the scintillation element further comprises a plurality of photodiodes, wherein the scintillation material is divided into a plurality of scintillation material pixels. Each of the plurality of pixels comprises at least one optical channel. Each of the scintillation material pixels is surrounded by non-scintillation material and wherein to each of the plurality of photodiodes one of the scintillation material pixels is associated, which is illustrated in Figs 4 and 5 in detail. The non-scintillation material surrounding each of the scintillation material pixel may be at least one of an air gap or a reflector, or a combination thereof. The reflector may be used for reflecting emitted light from the scintillation material back into the scintillation material, which may increase the detected light amount when used in combination with an optical channel.

According to a second aspect of the invention, an X-ray detector comprises a scintillation element according to at least one of the above-mentioned embodiments. The scintillation element may be applicable for any kind of X-ray detectors. An X-ray detector according to this embodiment may comprise at least one scintillation element comprising at least one of the above-elucidated configurations. The X-ray detector may also comprise a plurality of scintillation elements. The X-ray detector may further comprise a substrate onto which the photodiode of the scintillation element is arranged. Further, such a detector may comprise respective wiring and couplings for being able to receive and transmit detected electromagnetic radiation generated in the scintillation material, such that the X-ray detector can be used to generate an X-ray image.

According to a third aspect of the invention, a method of manufacturing a scintillation element for an X-ray detector comprises the steps of providing a photodiode, providing a scintillation material for X-ray radiation on the photodiode, wherein the scintillation material comprises an upper end configured to receive X-ray radiation and a lower end being in contact with the photodiode. The method further comprises creating at least one optical channel extending within the scintillation material, wherein the optical channel is configured for transferring electromagnetic radiation, which was generated in the scintillation material when having received the X-ray radiation, along the optical channel towards the photodiode. The at least one optical channel extends in a direction from the upper end of the scintillation material towards the lower end of the scintillation material and towards the photodiode and, wherein the at least one optical channel is completely surrounded by the scintillation material. The order of the steps mentioned hereinabove is not critical to the invention.

For instance, the scintillation element or parts of the scintillation element are formed by 3D printing methods. The scintillation material may be a powder embedded in a polymer, which is printed using a 3D printer. An optical channel filled with air, may be created in such a manner that the scintillation material may be printed onto the photodiode layer per layer and parts in the scintillation material are left empty for forming the optical channel. Optical channels filled with a transparent material may be created in such a manner, that the scintillation material is 3D printed on a photodiode (layer per layer) and the optical channels are printed using an extra 3D printing ink, or nozzle comprising the transparent material.

The method may further comprise creating a plurality of optical channels extending in the scintillation material.

According to an exemplary embodiment of the invention, the step of creating the at least one optical channel makes use of one at least one of the following methods: 3D printing, laser cutting, etching, or an electrode beam based method, or any combination thereof. The optical channel may be manufactured with at least one of these methods, such that accurate and thin optical channels can be provided.

### BRIEF DESCRIPTION OF THE DRAWINGS

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig 1 illustrates a scintillator pixel of the prior art.
Fig. 2 illustrates a scintillator pixel of the prior art.
Fig. 3 illustrates a scintillation element according to an embodiment of the present invention.
Fig. 4 illustrates a scintillation element according to an embodiment of the present invention.
Fig. 5 illustrates a scintillation element according to an embodiment of the present invention.
Fig. 6 illustrates a scintillation element according to an embodiment of the present invention.

### DETAILED DESCRIPTION OF EMBODIMENTS

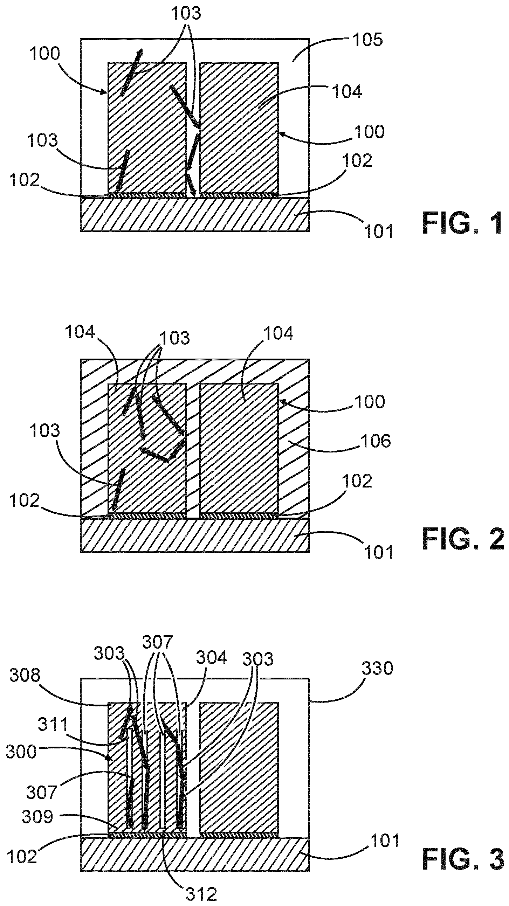

Fig. 1 illustrates a scintillator pixel (100) arranged on a photodiode (102) which in turn is arranged on a substrate (101). In Fig. 1, two scintillator pixels (100) are illustrated, wherein both are arranged on a respective photodiode (102) and the other side of the photodiodes (102) are arranged on a substrate (101). The scintillator pixel (100) comprise a scintillation material (104) which emits electromagnetic radiation (103) generated in the scintillation material (104) when receiving X-ray radiation. The scintillator pixels (100) are surrounded by an air gap (105), which is arranged on at least three sides of the scintillation pixel (100), hence the air gap is also arranged between the two scintillation pixels (100). As can be seen in Fig. 1, electromagnetic radiation (103) which is generated in the scintillation material (104) is emitted from the scintillation material (104) towards all directions of the scintillation pixel (100). The arrows indicating the emitting direction in the scintillation material (104). Only some of the emitted electromagnetic radiation (103) can be collected by the photodiode (102). One photon directly reaches the photodiode (103) on the left side. A part of the electromagnetic radiation (103) is emitted out of the scintillation pixel (100) on the left side and multiply reflected in the air gap (105) between the two scintillation pixels (100), wherein this electromagnetic radiation (103) is not received by the photodiode (102). A further part of the electromagnetic radiation is emitted to the top of the scintillation pixel (100) and leaves the scintillation pixel (100) into the air gap (105) at the top.

Fig. 2 illustrates a scintillator pixel (100) in a similar arrangement as described with Fig. 1. Instead of an air gap (105), the scintillation pixels (100) in Fig. 2 are surrounded by a reflector (106). In particular, the reflector (106) is arranged in the gap between the two scintillation pixels (100). Further, the reflector is arranged on the right and left side of the scintillation pixel (100), such that the scintillation pixel (100) is surrounded by the reflector on at least two sides. Furthermore, the reflector (106) is arranged on top of the pixel (100). Alternatively, the top of the pixel (100) may be covered by air. As can be seen, electromagnetic radiation (103) which is generated in the scintillation material (104) is emitted from the scintillation material (104) towards all directions of the scintillation pixel (100). The arrows indicating the emitting direction in the scintillation material (104). One photon directly reaches the photodiode (103) on the left side. Another photon is reflected at the interface of the scintillation pixel (100) and the reflector (106) on the top of the scintillation pixel (100). A further photon is reflected by the reflector (106) arranged in the gap between the two scintillation pixels (100). The photons reflected at the interface and reflected at the reflector are absorbed after multiple reflection inside the scintillation material (104). Hence, this electromagnetic radiation does not reach the photodiode (102) and is not detected. It shows that a reflector can reduce an overall signal of a scintillation element about 17 %, for example for an array with 546 µm pixel size, for an array of half pixel size a signal reduction about 28 % may be possible.

Fig. 3 illustrates a scintillation element (300) according to an exemplary embodiment of the present invention. The scintillation element (300) comprises a scintillation material (304) for X-ray radiation, a photodiode (102), wherein the scintillation material (304) is arranged on the photodiode (102). The scintillation material (304) comprises an upper end (308) configured to receive X-ray radiation, a lower end (309) being in contact with the photodiode (102), and at least one optical channel (307) extending within the scintillation material (304), wherein the optical channel (307) is configured for transferring electromagnetic radiation (303), which was generated in the scintillation material (304) when having received the X-ray radiation, along the optical channel (307) towards the photodiode (102). The at least one optical channel (307) extends in a direction from the upper end (308) of the scintillation material (304) towards the lower end (309) of the scintillation material (304) and towards the photodiode (102), and wherein the at least one optical channel (307) is completely surrounded by the scintillation material (304). The optical channel (307) comprises an upper side (311) and a lower side (312). The upper side (311) is facing the upper end (308) of the scintillation material and the lower side (312) is facing the lower end (309) of the scintillation material (304), wherein each of the upper side (311) and the lower side (312) are spaced apart from the respective upper end (308) and lower end (309) of the scintillation material. A distance by which the upper side (311) and the lower side (312) of the optical channel (307) are spaced apart from the upper and lower end (308, 309) of the scintillation material (304) is in a range of 0 µm to 60 µm, in particular in a range of 0 µm to 30 µm, in particular in a range of 1 µm to 30 µm. As can be seen Fig. 3, the distance of the optical channel (307) to the upper end (308) of the scintillation material (304) is larger than the distance of the optical channel (307) to the lower end (309) of the scintillation material (304). The distance of the optical channel (307) to the upper end (308) of the scintillation material (304) may also be smaller than the distance of the optical channel (307) to the lower end (309) of the scintillation material (304). Accordingly, the distance of the optical channel (307) to the upper end (308) and the lower end (309) of the scintillation material (304) must not be equal. The optical channel (307) may comprise a thickness in a range of 5 µm to 100 µm, in particular in a range of 10 µm to 50 µm, more particular in a range of 10 µm to 30 µm. Each channel of a plurality of channel may not comprise the same thickness, on the other side the thickness of each channel of a plurality of channels may be equal. As can be seen in Fig. 3, the optical channel (307) extends perpendicular to a main extension plane of the photodiode (102), which main extension plane extends perpendicular to an X-ray radiation receiving direction. The X-ray radiation may be received by the upper end (308) of the scintillation material (304). The above description of Fig. 3 refers to at least one optical channel (307), wherein the same description may apply to a plurality of optical channels (307). In Fig. 3 at least four optical channel (307) are arranged in the scintillation material (304), wherein more than four optical channels (307) may also be possible. Hence, the scintillation element (300) may comprise a plurality of said optical channels (307), which are arranged with a distance from each other inside the scintillation element (300), wherein the distance is in a range from 50 µm to 500 µm, in particular in a range from 50 µm to 200 µm. The scintillation element 300 may be part of an X-ray detector (330). The X-ray detector comprises the scintillation element (300). Further, the X-ray detector (330) may comprise a scintillation material pixel (as can be seen on the right side of Fig. 3) additionally to the scintillation element (300), such that the X-ray detector (330) comprises a mixture of structures. Moreover, the X-ray detector may comprise a plurality of scintillation elements (300) as described hereinabove, which are all arranged on the substrate 101.

Fig. 4 illustrates a scintillation element (300, 400) according to an exemplary embodiment of the present invention. Further, Fig. 4 illustrates two different embodiments of a scintillation element (300, 400). On the right side of Fig. 4, the scintillation element (300) as described with Fig. 3 is shown. On the left side of Fig. 4, another embodiment of the scintillation element (400) of the present invention is illustrated. On the other hand, Fig. 4 may be seen as a whole scintillation element comprising a scintillation material, which is separated by a non-scintillation material and at least two photodiodes, wherein the separated parts of the scintillation material comprise a different optical channel arrangement. The scintillation element (400) comprises a plurality of optical channels (407), wherein this embodiment may also comprise only one optical channel (407). The optical channels (407) extends towards the photodiode (102) with an angle between 0° to 20° with respect to an X-ray radiation receiving direction, that is perpendicular to a main extension plane of the photodiode (102). In other words, the optical channels (407) are inclined, wherein in Fig. 4 two rows of optical channels (407) are shown. The first row is inclined with the respective angle and the second row is inclined with the same angle but into the other direction. Therefore, the scintillation element (400) may comprise a plurality of rows of optical channels (407) extending in different depths inside the scintillation material (404), wherein each optical channel is inclined with a respective angle, and wherein the optical channels (407) belonging to one row are inclined into the same direction and optical channels (407) belonging to another row may be inclined about the same angle but into the other direction. Wherein the angle may be measured between the optical channel (407) and the extending direction of the photodiode (102). Further, Fig. 4 illustrates that a distance of the lower side (412) of the optical channel (407) to the lower end (409) of the scintillation material (404) is 0 µm. According to this arrangement, the optical channels (407) are directly arranged above the photodiode (102) without any scintillation material (404) between them. A received X-ray radiation (410) is illustrated with the arrows from above. The oblique optical channels (407) may avoid a transmission of the X-ray radiation to the photodiode, such that the whole X-ray radiation (X-ray quanta) may be absorbed by the scintillation material (404) and can be used for generating electromagnetic radiation in the scintillation material (404).

Fig. 5 illustrates a scintillation element (500) according to an exemplary embodiment of the present invention. The scintillation element (500) comprises oblique optical channels (507) which enable collection of photons from lateral regions and concentration of the collected photons on a smaller photodiode (102). The scintillation material (504) extends over the photodiode (102). In other words, the scintillation material (504) is larger than the extension direction of the photodiode (102). A distance between each of the plurality of optical channels (507) on the upper end (508) of the scintillation material (504) is larger than a distance of the plurality of optical channels (507) on the lower end (509) of the scintillation material (509). According to this arrangement, the optical channels (507) are arranged in a cone beam manner, such that electromagnetic radiation from lateral directions of the scintillation material (504) can be collected and transferred to a smaller photodiode (102). According to this embodiment, the scintillation element (500) may comprise a plurality of photodiodes (102), wherein the scintillation material (504) is divided into a plurality of scintillation material pixel (504-1, 504-2), wherein each of the plurality of pixels (504-1, 504-2) comprises at least one optical channel (507), wherein each of the scintillation material pixel (504-1, 504-2) is surrounded by non-scintillation material (505) and wherein to each of the plurality of photodiodes (102) one of the scintillation material pixel (504-1, 504-2) is associated. In particular, the non-scintillation material may be air or a reflector, which may at least partially surround the respective scintillation material pixel (504-1, 504-2). Accordingly, the scintillation element (500) may comprise an air (air gap) and/or a reflector as described with the embodiments of Fig. 1 and Fig. 2.

Fig. 6 illustrates a scintillation element (600) according to an exemplary embodiment of the present invention. The scintillation element (600) may comprise oblique optical channels (507) which collect photons from an unstructured scintillation material (604) and concentrate signal on photodiodes (102). In particular, the unstructured scintillation material (604) may be one scintillation material layer. Further, the scintillation element (600) may comprise a plurality of photodiodes (102), wherein for each photodiode (102) of the plurality of photodiodes at least one optical channel (507) is arranged. For instance, the scintillation material layer of Fig. 6, may comprise a plurality optical channels (507) as described with Fig. 5 or as described in any other of the above mentioned embodiments (Figs 3 to 5).

An X-ray detector may comprise at least one scintillation element as described with the embodiments of Figs 1 to 6, or it may comprise a plurality of such scintillation elements, wherein different embodiments of the scintillation element may be incorporated into one single X-ray detector. Moreover, a method for manufacturing a scintillation element may be able to manufacture a scintillation element of at least one of the above-mentioned embodiments or a combination thereof.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. Any reference signs in the claims should not be construed as limiting the scope.

### LIST OF REFERENCE SIGNS:

- 100: scintillation pixel
- 101: sub strate
- 102: photodiode
- 103: electromagnetic radiation
- 104: scintillation material
- 105, 505: air
- 106: reflector
- 300, 400, 500, 600: scintillation element
- 303: electromagnetic radiation
- 304,404, 504, 604: scintillation material
- 307, 407, 507: optical channel
- 308, 408, 508: upper end of the scintillation material
- 309, 409, 509: lower end of the scintillation material
- 311, 411: upper side of the optical channel
- 312, 412: lower side of the optical channel
- 330: X-ray detector
- 410: X-ray radiation

## Claims

1. A scintillation element (300) for an X-ray detector, the scintillation element comprising
a scintillation material (304) for X-ray radiation,
a photodiode (102), wherein the scintillation material is arranged on the photodiode,
wherein the scintillation material comprises
an upper end configured to receive X-ray radiation,
a lower end being in contact with the photodiode, and
at least one optical channel (307) extending within the scintillation material,
wherein the at least one optical channel is configured for transferring electromagnetic radiation, which was generated in the scintillation material when having received the X-ray radiation, along the optical channel towards the photodiode,
wherein the at least one optical channel (307) extends in a direction from the upper end of the scintillation material towards the lower end of the scintillation material and towards the photodiode, and
wherein the at least one optical channel is completely surrounded by the scintillation material.

2. The scintillation element according to claim 1,
wherein the optical channel (307) comprises an upper side and a lower side,
wherein the upper side is facing the upper end of the scintillation material and the lower side is facing the lower end of the scintillation material, and
wherein the upper side and/or the lower side are spaced apart from the respective upper end and lower end of the scintillation material.

3. The scintillation element according to claim 2,
wherein a distance by which the upper side and/or the lower side of the optical channel (307) are spaced apart from the upper and/or lower end of the scintillation material is in a range of 1 µm to 60 µm, in particular in a range of 1 µm to 30 µm.

4. The scintillation element according to one of the preceding claims,
wherein a distance of the lower side of the optical channel to the lower end of the scintillation material is 0 µm.

5. The scintillation element according to one of the preceding claims,
wherein the optical channel (307) is a non-filled optical channel comprising air or is a filled optical channel filled with a transparent material, which is transparent in the optical spectrum in the visible, ultraviolet or near infrared range.

6. The scintillation element according to one of the preceding claims,
wherein the optical channel extends perpendicular to a main extension plane of the photodiode (102), which main extension plane extends perpendicular to an X-ray radiation receiving direction.

7. The scintillation element according to one of the preceding claims 1 to 5,
wherein the optical channel (307) extends towards the photodiode (102) with an angle of between 0° to 20° with respect to an X-ray radiation receiving direction, that is perpendicular to a main extension plane of the photodiode.

8. The scintillation element according to one of the preceding claims, further comprising
a plurality of said optical channels (307), which are arranged with a distance from each other inside the scintillation element (300), and
wherein the distance is in a range from 50 µm to 500 µm, in particular in a range from 50 µm to 200 µm.

9. The scintillation element according to claim 8,
wherein a distance between each of the plurality of optical channels on the upper end of the scintillation material is larger than a distance of the plurality of optical channels on the lower end of the scintillation material.

10. The scintillation element according to one of the preceding claims,
wherein the scintillation material (304) is a powder embedded in a polymer, wherein the powder comprises at least one of rare earth oxysulfides, oxides, garnets, perovskites, zinc sulphide, calcium tungstate, cadmium tungstate, or ceramic powder.

11. The scintillation element according to one of the preceding claims, further comprising a plurality of photodiodes, and
wherein for each photodiode of the plurality of photodiodes at least one optical channel is arranged.

12. The scintillation element according to one of the preceding claims 1 to 10, further comprising
a plurality of photodiodes (102),
wherein the scintillation material (304) is divided into a plurality of scintillation material pixel,
wherein each of the plurality of pixels comprises at least one optical channel,
wherein each of the scintillation material pixel is surrounded by non-scintillation material, and
wherein to each of the plurality of photodiodes one of the scintillation material pixel is associated.

13. An X-ray detector, comprising a scintillation element according to one of the claims 1 to 12.

14. A method of manufacturing a scintillation element (300) for an X-ray detector, the method comprising
Providing a photodiode (102),
Providing a scintillation material (304) for X-ray radiation on the photodiode, wherein the scintillation material comprises an upper end configured to receive X-ray radiation and a lower end being in contact with the photodiode,
Creating at least one optical channel (307) extending within the scintillation material, wherein the optical channel is configured for transferring electromagnetic radiation, which was generated in the scintillation material when having received the X-ray radiation, along the optical channel towards the photodiode,
wherein the at least one optical channel extends in a direction from the upper end of the scintillation material towards the lower end of the scintillation material and towards the photodiode, and
wherein the at least one optical channel is completely surrounded by the scintillation material.

15. The method according to claim 14, wherein the step of creating the at least one optical channel makes use of one at least one of the following methods: 3D printing, laser cutting, etching, or an electrode beam based method.
